# EUROPEAN PATENT SPECIFICATION

(11) **EP 3 547 192 B1**
(45) Date of publication and mention of the grant of the patent: **26.10.2022**
(21) Application number: 18199533.3
(22) Date of filing: 10.10.2018
(51) Int. Cl.: G06F 21/55, H04L 9/40, H04L 12/40

(54) **SYSTEM AND METHOD OF BLOCKING A COMPUTER ATTACK ON A MEANS OF TRANSPORTATION**
SYSTEM UND VERFAHREN ZUR BLOCKIERUNG EINES COMPUTERANGRIFFS AUF EIN TRANSPORTMITTEL
SYSTÈME ET PROCÉDÉ DE BLOCAGE D'UNE ATTAQUE INFORMATIQUE SUR UN MOYEN DE TRANSPORT

(30) Priority: 30.03.2018 RU 2018111476; 04.09.2018 US 201816120762
(43) Date of publication of application: 02.10.2019
(73) Proprietor: AO Kaspersky Lab, Moscow 125212 (RU)
(72) Inventor: DYAKIN, Pavel V., 125212 MOSCOW (RU); SHADRIN, Alexander V., 125212 MOSCOW (RU); KULAGIN, Dmitry A., 125212 MOSCOW (RU)
(74) Representative: Chimini, Francesco

(56) References cited:
- US-A1- 2015 113 638
- US-A1- 2017 270 291
- US-A1- 2018 004 964

## Description

### FIELD OF TECHNOLOGY

The present disclosure relates to the field of computer security, more specifically to computer security of electronic systems of vehicles.

### BACKGROUND

At present the number of possibilities for computer attacks on automobiles, vehicles, and means of transportation as a whole is constantly increasing, and the number of such attacks is also growing as vehicles become more reliant on computer systems and electronic systems. Therefore, the creation of systems which are able to successfully detect computer attacks and counter them is an urgent task.

When computer attacks are carried out on internal devices of an automobile (primarily meaning the electronic control units (ECU)), even if the attack is successfully detected, it is exceedingly difficult to undertake adequate steps which can neutralize its consequences.

Thus, security experts Charlie Miller and Chris Valasek have published a number of works devoted to the security of automobiles. In a white paper entitled "Adventures in Automotive Networks and Control Units," the security experts described a method of gaining control of a Toyota Prius^{®} automobile of model year 2010 and a Ford Escape^{®} automobile of model year 2010 with the aid of a notebook and a Nintendo^{®} game pad by carrying out a computer attack on the ECU, involving the transmission of packets on the Controller Area Network (CAN) bus. Miller and Valasek were also able to hack into a Jeep Cherokee^{®} automobile of model year 2014 by penetrating the network of the automobile by Wi-Fi, exploiting a vulnerability in the multimedia on-board system of the automobile, as described in another paper entitled "Remote Exploitation of an Unaltered Passenger Vehicle" published on August 10, 2015. Another entry point was a vulnerability in the communication port of the cellular operator Sprint^{®}. To obtain control over the electronic systems of the automobile, the investigators conducted a computer attack on the CAN bus, having modified the firmware of the controller of the CAN bus by introducing a special program code. As a result of the computer attack, the investigators gained the ability to remotely control the operations of the steering wheel, the brake system, and other electronic systems of the automobile. The results of this investigation are in fact linked to the recall of 1.4 million Jeep Cherokee automobiles of model year 2014 by the Fiat Chrysler America group.

However, update cycles in the automobile industry take a long time, and therefore when a vulnerability is discovered in the electronic systems of an automobile the release of an update and installation thereof on the electronic systems of the automobile may take a rather long time, and a recall of the automobile may even be required, while old models of the automobile may even remain with no update at all and, consequently, exposed to the vulnerability. It therefore becomes necessary to devel op a solution which is able to detect and block such computer attacks until such time as the vulnerability is eliminated by the automobile maker with the aid of updates to the electronic systems of the automobile.

Existing intrusion detection systems (IDS) are able to discover anomalies in the data being transmitted on the buses of an automobile. However, the operation of IDS systems requires the assembly of a large statistical database, and therefore such systems cannot efficiently detect a complex targeted attack such as those described above. Yet these very kinds of computer attacks are the ones presenting the greatest danger. Additionally, existing intrusion detection systems cannot be easily adapted to the network architecture of vehicles. For example, because of the broadcast nature of the CAN protocol, it can be impossible for receiving ECUs to know whether the sent message was sent by an attacker or by the expected ECU. US 2015/113638 A1 discloses an electronic system for preventing a compromise of a vehicle electronic control system by monitoring data messages transmitted on an automobile network, and when the data message is a threat, performing an action base on the threat. US 2018/004964 A1 describes selectively intervening in a communications path to prevent an arrival of a malicious message at an ECU, e.g., using a filter that has preconfigured rules. US 2017/270291 A1 describes a plurality of controllers in a vehicle including a starter that puts the controller in an executable state, a determiner for determining whether the software has been tampered, and an output for outputting a preset signal when the software has been tampered.

It should be noted that in the event of a successful computer attack which resulted in substantial consequences, including a road traffic accident (RTA), information about the causes of the incident (such as the RTA) is extremely significant, even if it was not possible to detect the attack in advance and prevent it. This information is highly valuable both to the car makers and to the authorities conducting the investigation of the incident, since it makes it possible to develop the means for preventing such incidents in future. It must be noted that, at the stage of investigation of the incident already after it has occurred, all evidence indicating that it was caused by a computer attack, if such was the case, may have been removed from the system or lost. And it then becomes impossible to know that the incident was specifically caused by a computer attack, and not by human error, for example.

### SUMMARY

According to one aspect of the present disclosure, a computer-implemented method is provided for detecting attacks on electronics systems of a vehicle. The method includes intercepting a plurality of messages transmitted on a first communications bus between a plurality of electronic control units (ECUs) of a vehicle, and determining at least one recipient ECU that is a recipient of the intercepted messages based on which ECUs are communicatively coupled to the first communications bus. The intercepted messages and information indicating the determined at least one recipient ECU are stored in a log. The method further includes detecting a computer attack of the vehicle based on satisfaction of at least one condition of a rule by the stored messages and information in the log, and blocking the computer attack of the vehicle by performing an action associated with the rule. The rule may depend on one or more indicators of compromise comprised of malicious messages used in a computer attack and information on at least one ECU that is a recipient of the malicious messages.

In another example, a computer system for detecting attacks on electronics systems of a vehicle is provided. The computer system includes a plurality of electronic control units (ECUs), a first communications bus configured to communicatively couple the plurality of ECUs, and a hardware processor. The hardware processor is configured to intercept a plurality of messages transmitted on the first communications bus between the plurality of ECUs, and determine at least one recipient ECU that is a recipient of the intercepted messages based on which ECUs are communicatively coupled to the first communications bus. The hardware processor is further configured to store, in a log, the intercepted messages and information indicating the determined at least one recipient ECU. The processor is configured to detect a computer attack of the vehicle based on satisfaction of at least one condition of a rule by the stored messages and information in the log, and block the computer attack of the vehicle by performing an action associated with the rule. The rule may depend on one or more indicators of compromise comprised of malicious messages used in a computer attack and information on at least one ECU that is a recipient of the malicious messages.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1A-1B** are block diagrams depicting examples of a network architecture of a means of transportation using the example of an automobile.
**Fig. 2A-2C** show examples of the arrangement of a protection module in the network of a means of transportation.
**Fig. 3** presents an example of a rules creation system.
**Fig. 4** presents a system for blocking a computer attack on a means of transportation.
**Fig. 5A****-****Fig.5B** show a flowchart illustrating methods of implementing aspects of the present disclosure, specifically for the systems of **Fig. 3-4****.**
**Fig. 6** presents the format of a frame of the CAN protocol.
**Fig. 7** is a block diagram of a computer system on which the disclosed system and method can be implemented according to an exemplary aspect.

### DETAILED DESCRIPTION

Exemplary aspects are described herein in the context of a system, method, and computer program product for detecting attacks on electronics systems of a vehicle. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

Glossary: A number of terms are defined herein which will be used to describe variant aspects of the present disclosure.

A means of transportation (hereafter, MT) is a device configured to transport people, freight, or equipment installed aboard it on the roads. For example, the device may be a vehicle, such as an automobile. In the present disclosure, a means of transportation may sometimes be referred to as an automobile or a vehicle.

A means of transportation has an electronic system that includes one or more embedded systems configured to control one or more of the electrical systems or other subsystems of the vehicle. For example, the electronic system of an automobile may include:
1. Sensors and setpoint generators configured to detect operating conditions (e.g. engine speed) and setpoint values (e.g. switch position). The sensors and setpoint generators are further configured to convert physical variables into electrical signals.
2. An electronic control unit (ECU) configured to process the information from the sensors and setpoint generators in mathematical computing processes (open- and closed-loop control algorithms). The ECU controls the actuators by means of electrical output signals. In addition, the ECU acts as an interface to other systems and to the vehicle diagnosis system.
3. Actuators configured to convert the electrical output signals from the ECU into mechanical variables (e.g. solenoid-valve needle lift).

An electronic control unit (ECU) is a structurally separate and functionally complete portion of electronic equipment that contains an electronic circuit of any given degree of complexity for the processing of information constituted by electric signals of an established form.

A bus is a topology of the data transmission network in which all the nodes are connected by passive lines of communication enabling a transmission of data in both directions.

A frame (also a message) is a data block of a communication channel protocol defining the order and value of bits or bit fields in a transmission sequence on a communication channel.

Advanced driver assistance systems are systems for helping the driver of an MT in monitoring the MT, warning the driver and braking the MT, with control processes of the MT, and so on.

Telematic data (also telematics) is navigational data and data on the current state of the working elements which can be transmitted to a dispatch center by the onboard navigational and communication equipment of road vehicles via mobile communication channels.

An information security incident is one or more undesirable or unexpected information security events which will, with a significant degree of probability, result in the compromising of business operations and create threats to information security.

In the present application, by "incident with a means of transportation" (hereafter, incident) is meant one or more undesirable or unexpected events resulting in a change in the expected behavior of an MT, including a road traffic accident (RTA). Aspects of the present disclosure help to solve the stated technical problem precisely in the case when an incident with a means of transportation was caused as a result of an information security incident.

Indicators of compromise (IOC, also indicators of infection) are artifacts or residual signs of an intrusion into an information system which are observable on a computer or in a network. Typical indicators of compromise are antivirus records, IP addresses, check sums of files, URL addresses, domain names of botnet command centers, and others. A number of standards exist for indicators of compromise, in particular: OpenIOC, STIX (Structured Threat Information eXpression), and CybOX^{™} (Cyber Observable eXpression), and others.

A *computer attack* (also referred to as a cyber attack or malicious attack) is a targeted action on information systems and information telecommunication networks by hardware and software, carried out for the purpose of breaching the information security in these systems and networks.

A *targeted attack* (TA) is a particular instance of a computer attack directed at a specific organization or a specific individual.

It should be noted that the present disclosure may be applied to all types of means of transportation utilizing engines (internal combustion engines, hydrogen engines, electrical engines) and containing at least one ECU.

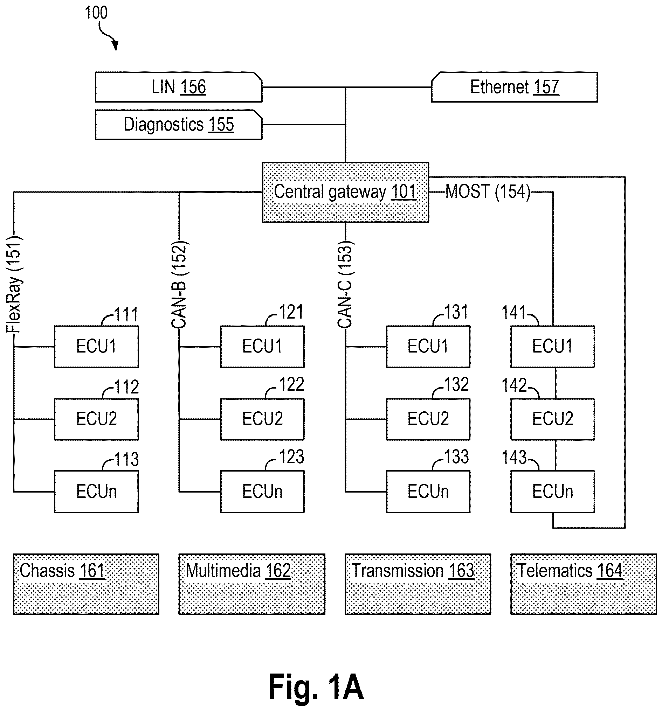

**Fig. 1A** illustrates an example of a network architecture **100** of a means of transportation using the example of an automobile. First of all, it should be noted that the following buses are used in modern MT, especially automobiles, in accordance with the current standards. For example, the network architecture **100** may be configured to implement CAN (Controller Area Network), which is a communications standard for a network of a means of transportation (and is further specified by ISO 11898-1), which is configured to allow microcontrollers and devices of a vehicle to communicate with each other (e.g., without a host computer). The CAN bus is divided into a high-speed bus CAN-C (ISO 11898-2), in which the speed of data transmission is between 125 kbit/s and 1 Mbit/s, and a low-speed bus CAN-B (ISO 11898-3), in which the speed of data transmission is between 5 kbit/s and 125 kbit/s. The network architecture may be further configured to implement an extension to CAN, referred to as CAN with Flexible Data-Rate (CAN FD).

In another example, the network architecture **100** may be configured to implement FlexRay, which is an ISO 17458-1-17458-5 standard developed as a high-speed and reliable replacement for CAN. The network architecture **100** may be configured to implement LIN (Local Interconnect Network), an ISO 17987 standard for an industrial network, oriented toward the control of automobile systems of low liability. In another example, the network architecture **100** may be configured to implement MOST (Media Oriented Systems Transport), which is the de facto standard for multimedia and computer entertainment networks in the automobile industry. In another example, the network architecture **100** may be configured to use Ethernet, which is a technology for packet data transmission between devices for computer and industrial networks, described by the IEEE standards of group 802.3. It should be noted that the mentioned standards are continually being improved, and new standards and technologies used in means of transportation are also appearing. Therefore, the scope of the present disclosure is not limited to the standards mentioned here, but rather is applicable to any technologies which may be used in means of transportation.

The network **100** of the vehicle may be configured to allow message exchange between ECUs (i.e., nodes) using a multi-master serial bus, such as a CAN bus. The network **100** of a modern MT includes a central gateway **101,** a plurality of ECU **111-113** (labeled as ECU1, ECU2, ... ECUn) associated with a chassis **161** of the vehicle and communicatively coupled thereto by a first bus **151** (e.g., a FlexRay bus), a plurality of ECU **121-123** associated with a multimedia subsystem **162** (also in-car entertainment (ICE), in-vehicle infotainment (IVI)) of the vehicle and communicatively coupled thereto by a second bus **152** (e.g., a CAN-B bus), another plurality of ECU **131-133** associated with a transmission system **163** of the vehicle and communicatively coupled thereto by a third bus **153** (e.g., CAN-C bus) and another group of ECU **141-143** associated with telematics **164** of the vehicle and communicatively coupled thereto by a fourth bus **154** (e.g., a MOST bus). The central gateway **101** also has outputs to the diagnostic bus **155,** a local interconnect network (LIN) **156** and an Ethernet **157.** In the present example, the network architecture of the MT contains a single central gateway **101,** connecting all subsystems of the MT by means of the buses **151-157.** As used herein, a module or subsystem that is "connected" to another module or subsystem is communicatively coupled to that module or subsystem by any number of intervening elements, including directly coupled or indirectly coupled.

In some examples, the bus may be a limited communication interexchange that does not support addressing. In one example, the messages are broadcast to all nodes on the bus and each node decides whether the message is intended for them. For example, using a CAN bus, ECUs will broadcast messages, and other ECUs that are interested in certain messages (i.e., by CAN identifier) will listen for those messages and ignore the rest of the messages. In other words, there is no source identifier or authentication built into CAN messages. These limitations introduce challenges in adapting existing computer security techniques to the electronic systems of vehicles. For example, these limitations allow a malicious component to both sniff traffic on the CAN network, as well as masquerade as other ECUs (i.e., data injection). These limitations also make it difficult to reverse-engineer traffic for purposes of computer security analysis because there is no way to know which ECU is sending or receiving a particular CAN message.

Each ECU may include a CAN controller (as a discrete component or as an integral part of the ECU's microcontroller) configured to receive and transmit messages on the CAN bus. To receive a message, the CAN controller may be configured to store received serial bits from the bus until an entire message is available, which can then be fetched by the host processor (e.g., by the CAN controller triggering an interrupt). To transmit a message (e.g., to other ECUs), the CAN controller may be configured to relay a message (provided by the microcontroller) by transmitting the bits serially onto the bus when the bus is free.

In some examples, the ECU may further include a transceiver configured to facilitate receipt of messages by converting a data stream on the bus from CAN bus levels to levels that the CAN controller uses, and facilitate transmission of messages by converting the data stream from the CAN controller to CAN bus levels. In one example, the ECU may be configured to, using the CAN transceiver, transmit a message serially onto the bus using a non-return-to-zero (NRZ) format, which is then received by all ECUs on the bus.

A message or frame may include an identifier (ID) and a data payload (e.g., eight or 64 data bytes per frame). The message may further include redundancy code (cyclic redundancy check, or CRC), an acknowledgement slot, and other fields. In some examples, the identifier field of the message indicates a priority of the message (e.g., the lower the value, the higher the priority). The identifier field may also be used by each receiving ECU to determine whether they should process the bus signal and receive the message.

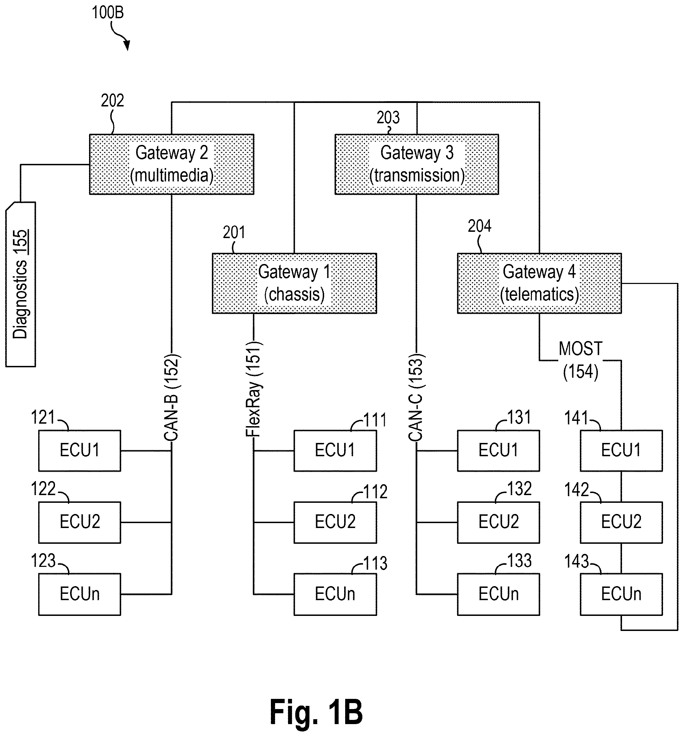

**Fig. 1B** presents another example of the network architecture **100B** of a means of transportation. The network **100B** of the MT contains several interconnected gateways **201-204,** each of which is responsible for a particular subnetwork. Thus, the gateway 1 **(201)** is connected to the ECU **111-113** by the FlexRay bus **151,** which are responsible for the chassis of the MT. The gateway 2 **(202)** is connected by the CAN-B bus **152** to the ECU **121-123,** which are responsible for the multimedia subsystems of the MT. The gateway 3 **(203)** is connected by the CAN-C bus **153** to the ECU **131-133,** responsible for the transmission. And the gateway 4 **(204)** is connected by the MOST bus **154** to the ECU **141-143,** responsible for the telematics.

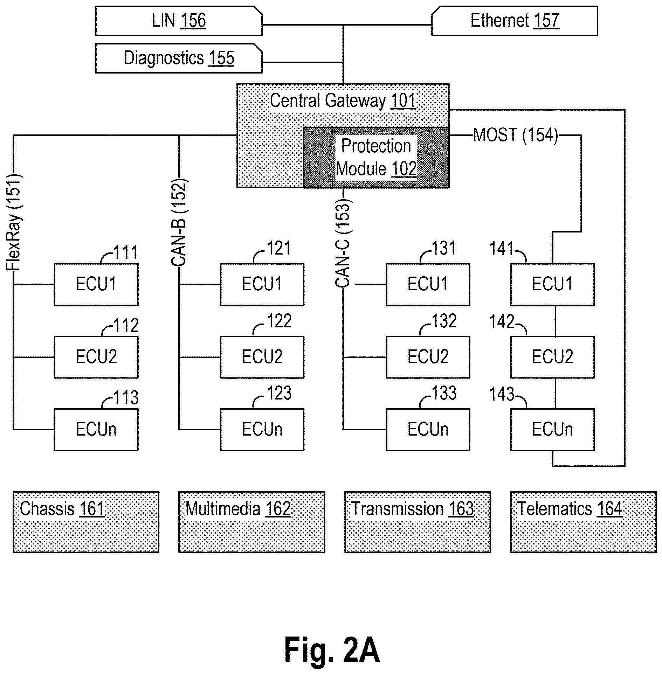

**Fig. 2A** presents an example of the arrangement of a protection module **102** in the network of a means of transportation. In this example, the network architecture **100** presented in **Fig. 1A** is used. The protection module **102** serves chiefly to block a computer attack on the MT. By a computer attack on the MT is meant, primarily, a computer attack on the networks of the MT and the electronic systems of the MT, especially the ECU and network gateways. The functionality of the protection module **102** will be described in further detail below. In the example being discussed in **Fig. 2A** the protection module **102** is a software component of the central gateway **101** and thus it provides protection for all the nodes of the network.

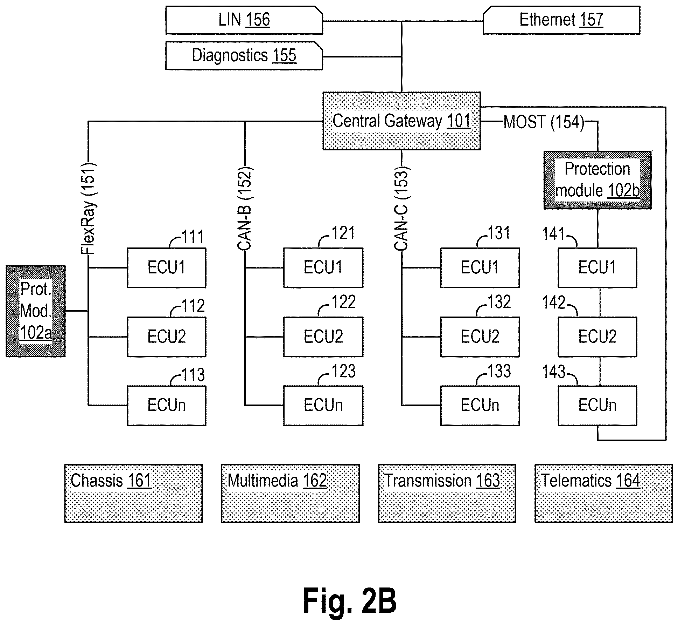

In another example, in **Fig. 2B****,** a system is shown which contains two protection modules **102a-102b,** the first of which is connected to the FlexRay bus **151,** and the second to the MOST bus **154,** and accordingly each of the protection modules **102a-102b** will provide protection for the network/subnetwork to which it has access. Obviously, other examples of the connection of the protection module to the network are also possible.

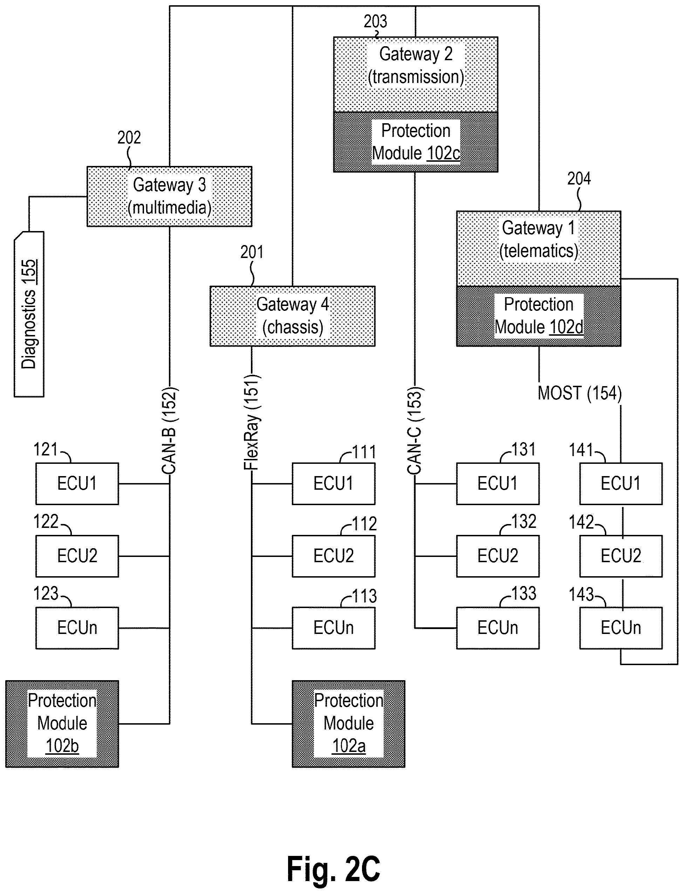

**Fig. 2C** presents yet another example of the arrangement of the protection module 102 in the network of a means of transportation, making use of the architecture presented in **Fig. 1B****.** The network contains four protection modules **102a-102d.** The protection module **102a** is connected to the FlexRay bus **151,** the protection module **102b** is connected to the CAN-B bus **152,** and the protection modules **102c-102d** are software components of the gateways **203-204** respectively. Each protection module **102a-102d** will provide protection for the network/subnetwork to which it has access. Obviously, other examples of the connection of the protection module to the network are also possible. In the general instance, the protection module may be connected to any given subnetwork (i.e., to a bus) and to any given gateway in order to ensure total protection for the network of the MT.

In one example, an ECU may belong to one of the following categories: primary electronic system of the MT, and auxiliary electronic system of the MT. Lists of the ECU from the primary and auxiliary systems of the MT may be contained, for example, in the memory of one or more protection modules **102a-102d** or in the memory of the gateway. The primary electronic systems include the ECU critical to the control of the MT and the safety of the MT and the people in its surroundings. The auxiliary electronic systems include the ECU providing additional convenience to the driver, affording entertainment options and other additional functions of the MT, the disconnecting of which does not impact the ability to control the MT or its safety.

In one example, ECUs of the auxiliary electronic systems of the MT may include driver assistance systems, multimedia systems (also in-car entertainment (ICE), in-vehicle infotainment (IVI)), the telematics. The driver assistance systems may contain, in particular, the following ECU: a parking sensor (also parktronics, parking assistance system); a camera monitor system; a block heater; and an anti-lock braking system (ABS). The multimedia systems may include, in particular: a navigation system; an in-car Internet; a steering wheel audio controls; and a hands free voice control. The telematics may include, in particular: a telematic control unit (TCU); a global positioning system (GPS) unit; an external mobile communication interface (GSM, GPRS, 3G, 4G (LTE) Wi-Fi, WiMAX, or Bluetooth), one or more sensors, including acceleration, impact, and spatial orientation sensors; and others. In yet another particular example, the list of ECU of the auxiliary electronic systems of the MT further contains untrusted wireless connection channels and autonomous driving systems (down to and including the last level of control).

In another example, the list of ECU of the primary electronic systems of the MT includes, in particular: control units associated with the gearbox, and control units associated with the chassis. Control units associated with the gearbox include, in particular: a transmission control unit, a traction control system (TCS), and others. Control units associated with the chassis of the vehicle include, in particular: a cruise control system, a lane-holding system, and others.

It should be noted that, in one example, several ECU from the list of auxiliary electronic systems may be moved to the list of primary electronic systems, such as the ABS system. In another example, the reverse is the case. It should also be noted that, in one example, the lists of primary and auxiliary electronic systems may differ in dependence on the make, model or type of the MT and may be changed adaptively.

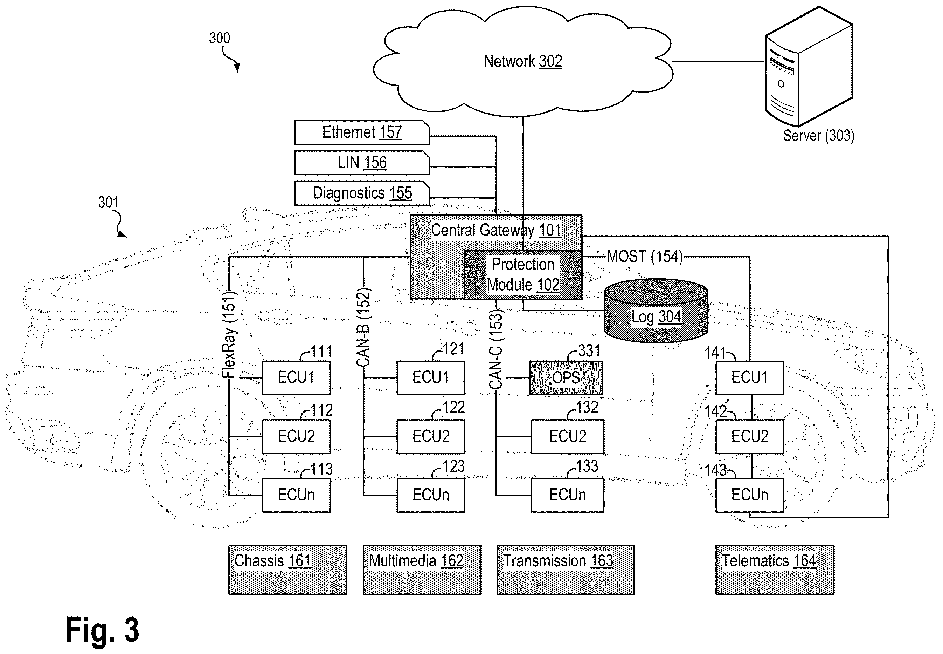

**Fig. 3** presents an example of a rules creation system **300.** In the example considered, the network architecture of the MT has the appearance previously described in **Fig. 2A****,** although the network architecture may be any one of those previously indicated. The system contains at least one means of transportation **301,** which in turn includes an occupant protection system (OPS) **331** and a protection module **102.** The OPS **331** is connected to the buses of the MT (in the given example, to the CAN-C bus **153)** and is configured to ascertain the moment in time of the occurrence of an incident with the MT (such as an RTA).

The protection module **102** is also connected to the buses of the MT (in the given example, it is a module of the central gateway **101)** and is configured to intercept messages (also frames) circulating on the buses of the MT, in order to, in the process of intercepting the messages, save in a log **304** these intercepted messages. The protection module **102** may be further configured to save, for each intercepted message, recipient information as to at least one ECU of the MT which is the recipient of that message. The protection module **102** also serves to transmit to the server **303** the portion of the log **304** containing the messages, as well as the information as to at least one ECU which is the recipient of at least one of the mentioned messages which were intercepted by the protection module **102** on the buses of the MT in a certain period around the time of occurrence of the incident with the MT (i.e., in the interval (tₒ-Δt, t₀+Δt), where t₀ is the time of occurrence of the incident with the MT, and Δt is the certain period around the time of occurrence of the incident with the MT, for example 10 seconds).

Information about the ECU is used to uniquely identify the ECU and it includes, in particular, the unique identifier of the ECU or its designation.

The protection module **102** may communicate with the server **303** by means of a network **302** (i.e., a wireless communications network, such as a Wi-Fi network, LTE, and others). The server **303** is configured to receive the log **304** from the protection module **102** and to detect a computer attack by analyzing the received log **304.** The possibility of carrying out a computer attack is contingent upon a vulnerability of the electronic systems of the MT, especially the ECU. Furthermore, the server **303** is configured to determine, in particular, the following indicators of compromise when detecting a computer attack: the messages used in the computer attack; for each message, information on at least one ECU of the MT which is the recipient of at least one of the mentioned messages. The server **303** is also configured to create rules for the protection module **102** on the basis of the indicators of compromise, a rule containing at least one condition for the application of the rule for the detecting of a computer attack on the MT, and at least one action upon application of the rule for blocking the computer attack on the MT. Thus, the condition for application of the rule constitutes a dependency, in particular on the indicators of compromise, which makes it possible to detect a computer attack on the MT. For example, the condition for application of the rule might be as follows: all of the determined indicators of compromise are found in the log **304.**

The action upon application of the rule also depends on the indicators of compromise. For example, if an indicator of compromise contains a defined message on the CAN bus and information about the recipient of this message, then the action upon application of the rule might be as follows: block all messages being transmitted on the CAN bus to that recipient. Other possible examples for the creation of rules for the protection module on the basis of the indicators of compromise will be presented below.

In a particular example, the indicators of compromise further include the time of interception of the message and, moreover, in the process of intercepting messages the time stamps corresponding to those messages and designating the time of interception of those messages are also saved in the log. In another example, the indicators of compromise further include information on at least one ECU which is the recipient of at least one of those messages and, furthermore, the log **304** received further contains at least one of the mentioned ECU.

In one particular example, the condition for application of a rule includes the following: the traffic from the buses of the MT intercepted by the protection module contains a defined group of messages (for example, from among the messages contained in defined indicators of compromise).

As mentioned above, an example computer attack on a Jeep Cherokee automobile of model year 2014 has been demonstrated. The following discussion examines more closely how the computer attack was carried out. The cyber-attack included the exploitation of a vulnerability of a vehicle's parking assistance system. A functionality is embedded in the Jeep which blocks the brakes at the moment when the automobile switches to the diagnostic session. For this, a diagnostic CAN message must have been received. As a rule, the majority of ECU ignore such messages if the speed of the automobile exceeds 7-15 km/h, and therefore such a computer attack is possible during slow movement of the automobile. After a switch of the automobile to the diagnostic state in the example being discussed, its brakes cease to work, which is a significant safety problem, even if the automobile is moving slowly at this time. A hacker might utilize this functional inadequacy and send a message on the CAN bus, the message being a command to open a diagnostic session with the ABS of the ECU:
EID: 18DA28F1, Len: 08, Data: 02 10 03 00 00 00 00 00

The hacker then depresses on the brakes to the utmost. This command is carried out by sending several messages on the CAN bus:
EID: 18DA28F1, Len: 08, Data: 10 11 2F 5A BF 03 64 64
EID: 18DA28F1, Len: 08, Data: 64 64 64 64 64 64 64 64
EID: 18DA28F1, Len: 08, Data: 64 64 64 00 00 00 00 00

Thus, the indicated CAN messages may be defined as indicators of compromise and, in the case of the described vulnerability, in the example aspect the condition for application of the rules on the basis of indicators of compromise may be defined as the presence of the aforementioned group of messages during the movement of the automobile:
EID: 18DA28F1, Len: 08, Data: 02 10 03 00 00 00 00 00
EID: 18DA28F1, Len: 08, Data: 10 11 2F 5A BF 03 64 64
EID: 18DA28F1, Len: 08, Data: 64 64 64 64 64 64 64 64
EID: 18DA28F1, Len: 08, Data: 64 64 64 00 00 00 00 00

Thus, upon receiving these messages during the movement of the automobile, the actions upon application of the rule will be carried out and the computer attack will be blocked, and the above-described scenario will not take place.

In another example, the condition for application of a rule additionally includes information on the fact that the receivers or the senders of messages from the aforementioned group of messages are certain ECU. Thus, in the example considered with the Jeep, the condition for application of the rule will also contain information on the recipient of the messages - the ABS of the ECU. For instance, the condition of the rule may specify (a) that the following group of messages is received:
EID: 18DA28F1, Len: 08, Data: 02 10 03 00 00 00 00 00
EID: 18DA28F1, Len: 08, Data: 10 11 2F 5A BF 03 64 64
EID: 18DA28F1, Len: 08, Data: 64 64 64 64 64 64 64 64
EID: 18DA28F1, Len: 08, Data: 64 64 64 00 00 00 00 00, and in which (b) the recipient of the group of messages is:
   ABS of the ECU

In yet another particular example, the condition for application of the rule will also contain the information that messages from a defined group of messages are arranged in a particular order and were intercepted by the protection module during a particular interval of time. In the context of the Jeep example, the condition for application of the rule may specify that (a) a group of messages is received in the following order:
1. EID: 18DA28F1, Len: 08, Data: 02 10 03 00 00 00 00 00
2. EID: 18DA28F1, Len: 08, Data: 10 11 2F 5A BF 03 64 64
3. EID: 18DA28F1, Len: 08, Data: 64 64 64 64 64 64 64 64
4. EID: 18DA28F1, Len: 08, Data: 64 64 64 00 00 00 00 00,
that (b) the recipient of the group of messages is: "ABS of the ECU"; and that (c) the time difference of receiving the messages is:
1.-2. - not more than 1 minute
2.-3., 3.-4. - not more than 100 milliseconds

Thus, the condition has been added to the indicated rule that an interval of time not exceeding 1 minute should occur between the first and the second message, and an interval of time not longer than 100 milliseconds should occur between the second and the third, as well as the third and the fourth message. In fact, the first message contains a command to switch to diagnostic mode, after which come three messages containing a braking command, and therefore they will follow closely.

In yet another particular example, the condition for application of the rule will depend on the state of the ECU. In another example, the condition for application of the rule will also depend on the indicators of the sensors of the MT. For example, the rule may contain the condition of movement of the automobile. That is, if the automobile is in motion and the above-indicated CAN messages arrive, the condition for application of the rule will be fulfilled, but if the automobile is not moving, the rule will not be applied, since in the second case the receiving of such messages does not indicate the exploiting of a vulnerability and a computer attack.

As for the actions upon application of a rule, in one example they include in particular the following: (a) sending a message to at least one ECU; (b) blocking the sending of at least one message from among the messages contained in defined indicators of compromise; or (c) making a change in at least one message from among the messages contained in defined indicators of compromise.

In one example, the message sent to at least one ECU may contain a command specifying instructions to disconnect at least one ECU from the list of ECU of the auxiliary electronic systems of the MT. In the example of the Jeep, the ABS of the ECU may be disconnected, for example, as a result of which the above-described computer attack will not take place. In another example, the message sent to at least one ECU may contain a command specifying instructions to turn on or enable a safety mode for at least one ECU from the list of ECU of the primary electronic systems of the MT. In safety mode, the functioning of the MT is subjected to restrictions which allow either the total elimination or the reduction to an acceptable degree of the risks of its operation in a dangerous situation. For example, it is possible to limit the maximum speed of the MT. When moving at restricted speed, the driver still has the option of parking the MT or getting to a service station (the MT is not entirely blocked), but the risks involved in the control of the MT are significantly reduced.

In one particular example, the blocking of the sending of the messages contained in the mentioned rule is performed via the gateway from one subnetwork to the other subnetwork according to the rule. For example, in the context of the sample network architecture of **Fig. 3****,** the central gateway **101** may block the sending of messages from one subnetwork to the other, for example between the CAN-B bus **152** and the CAN-C bus **153.** The gateway **101** receives a message from one subnetwork of the electronic system of the MT configured for transmission to the other subnetwork and uses the protection module **102** to verify the possibility of transmission of the message. Transmission of the message occurs only in the event that the protection module allows this message to pass. Otherwise, the message will not be transmitted further;

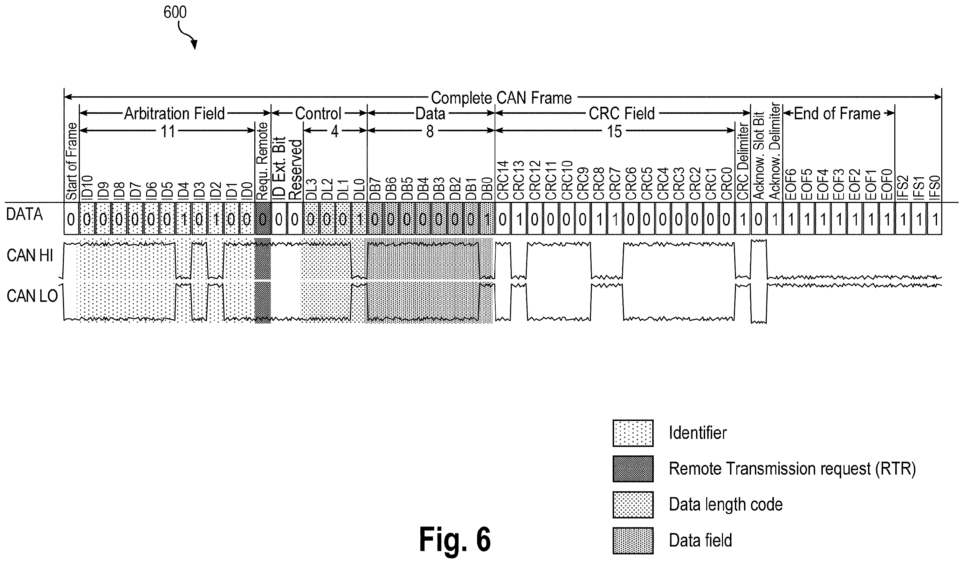

In another example, the blocking of the sending of the messages contained in the mentioned rule may be performed between the ECU on the same bus according to the mentioned rule. For example, in the context of the network in **Fig. 3****,** the ability to send messages between ECU1 **121** and ECU2 **122** may be blocked on the CAN-B bus **152.** A variety of techniques can be used for blocking the transmission of a message on a CAN bus by one ECU using the means of another ECU situated on the same bus. One such possible method will be described as follows. When transmitting a message on a CAN bus, a bit corresponding to 1 may be suppressed by a bit 0 when the latter is transmitted at the same time as the 1 (the frame format is shown in **Fig. 6****).** The data frame on the CAN bus has a data structure ending with a field containing a check sum of the message (15 bits). Therefore, the central gateway **101** has the possibility of checking the frame content with the use of the protection module **102,** and upon detecting an unwanted message in the process of transmitting the check sum of this message the protection module **102** can change the value of said check sum by sending a sequence consisting of bits 0. In keeping with the operating principles of the CAN bus, in this case instead of the original value of the check sum, a different - zero - value will be established on the bus. Upon receiving such a message, the ECU addressee will detect a discrepancy in the check sum of the message, and such a message will not be processed.

In a particular example, the list of ECU of the auxiliary electronic systems of the MT contains in particular: a) the driver assistance systems; b) the multimedia systems; c) the telematics. In another example, the list of ECU of the primary electronic systems of the MT contains in particular: a) the gearbox; b) the chassis.

In yet another example, analysis of the received log is carried out with the use of methods of machine learning or by an expert.

In one example, the change made in at least one message from among the messages contained in defined indicators of compromise may be performed by a protection module 102 to remove malicious commands contained in the message. In one implementation, the protection module 102 can modify at least one message transmitted from a subnet to another subnet in which the protection module 102 is located in a gateway connecting these subnets. For example, in the example system shown in Fig. 2C, the protection module 102c located in the gateway 203 between the buses 153, 154 may modify a message sent from an ECU in the bus 154 having an ECU addressee in the bus 153 to remove malicious commands relating to the transmission components of the vehicle. In another example, the change made in at least one message from among the messages contained in defined indicators of compromise may be divided into two actions: a blocking of messages (as described earlier) and the sending of a new message which does not contain indicators of compromise according to the mentioned rule(s).

In a particular example, the ECU which are contained in the action upon application of a rule include the ECU which are contained in the indicators of compromise.

The use of methods of machine learning makes it possible to discover anomalies in the log entries by comparing them against data in which the anomalies are known to be absent. Furthermore, one may use models describing the functioning of the means of transportation. Departures from these models are a sign of an anomaly requiring further investigation. For example, a significant change in speed of the MT during a short interval of time may be considered to be an anomaly. Another example of an anomaly may be the sending of a command from the subnetwork of the multimedia system of the MT to the subnetwork controlling the chassis of the MT.

In cases when anomaly detection system have not initially found any problems, yet there is reason to assume that a problem nevertheless exists, experts having the set of necessary skills may be brought in. For example, additional analysis may be performed in response to detecting a series of the same kind of RTA, occurring in situations when no obvious background existed for them. In another example, additional analysis may be performed in response to detecting RTA with serious consequences, in cases where the cause of the RTA could not be identified by other means.

An expert possessing information on the purpose of the messages, the specifications of the protocols, and other necessary information should reconstruct the picture of the event and explain whether the RTA was caused by anomalous behavior of the system, or whether the system was functioning properly at the time of the RTA.

After detecting a computer attack, in one example a request to update the software may be submitted to the supplier of the ECU (for example of the ABS of the ECU) which is the indicator of compromise (or to the maker of the MT). After receiving from the supplier of the ECU (or the maker of the MT, respectively) an update correcting the possibility of carrying out a computer attack and after installing this update in the corresponding ECU, a script may be added which removes the rule, since said rule is no longer relevant (step **533).**

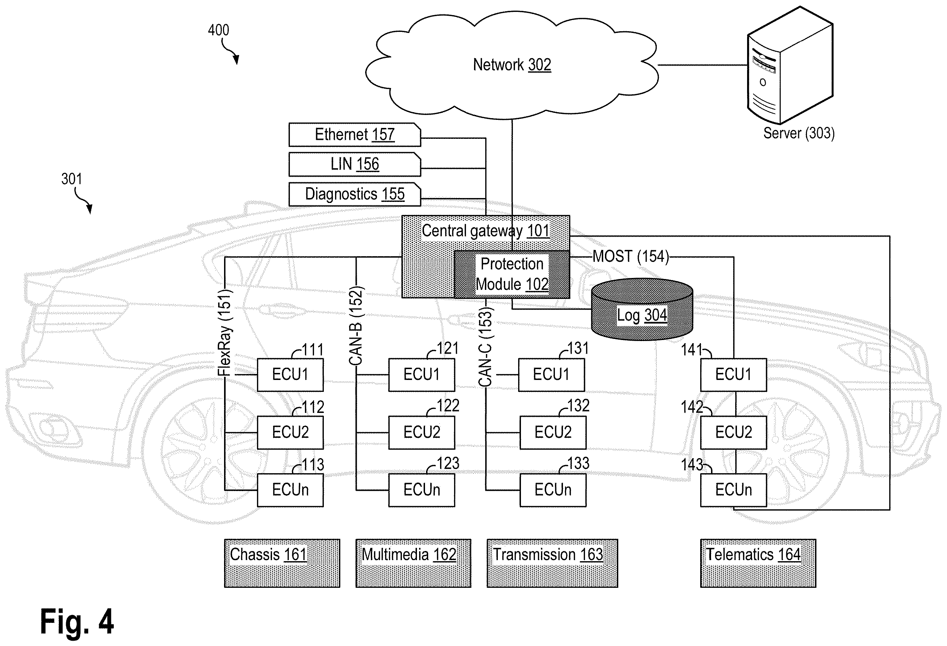

**Fig. 4** presents a system **400** for blocking a computer attack on a means of transportation. The system **400** is configured to implement the method of blocking a computer attack which is carried out by the protection module **102** in the means of transportation **301.** Therefore, a number of the elements of the system **400** coincide with those described in **Fig. 3****.** The system contains at least one bus of the MT, to which is connected at least one ECU. The system contains a protection module **102,** which is connected to at least one of the buses of the MT. As an example, the network architecture of the MT presented in **Fig. 2A** is used. The protection module **102** is configured to obtain rules from the server **303** via the network **302.** A rule obtained, created on the basis of the indicators of compromise, contains at least one condition for application of the rule and at least one action upon application of the rule. The indicators of compromise are, in particular, the following: (i) messages used in a computer attack, and (ii) information on at least one ECU of the MT which is the recipient of at least one of the mentioned messages.

Furthermore, the protection module **102** is configured to intercept messages being transmitted on the buses of the MT, for checking the condition for the application of the rules obtained with the use of the log **304,** and also for blocking a computer attack on the MT by performing the actions upon application of the rule when the conditions for application of that rule are fulfilled.

The particular examples described above for the system of **Fig. 3** are also applicable to the system of **Fig. 4****.**

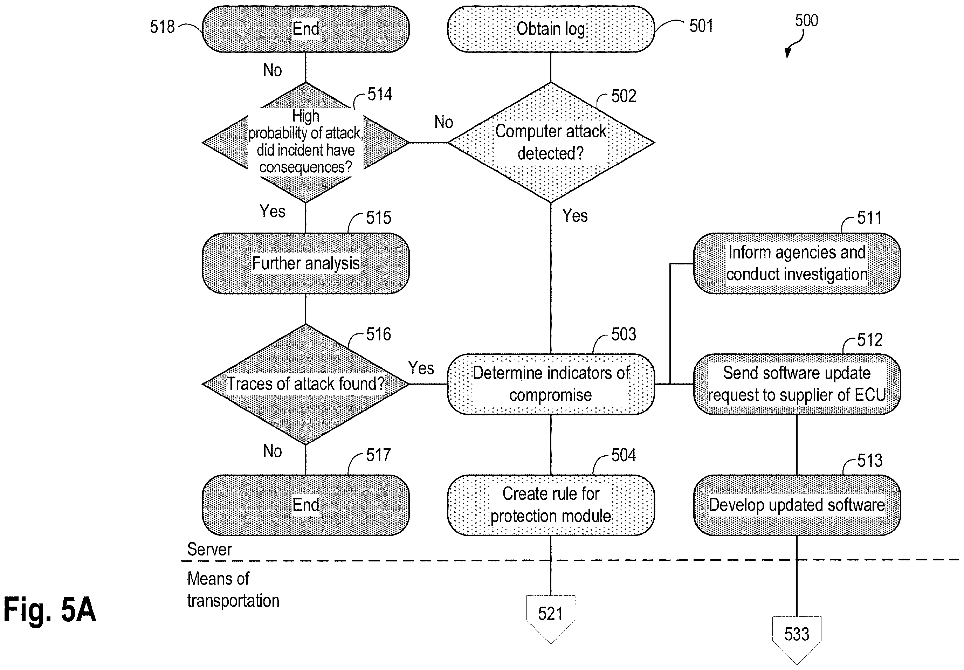

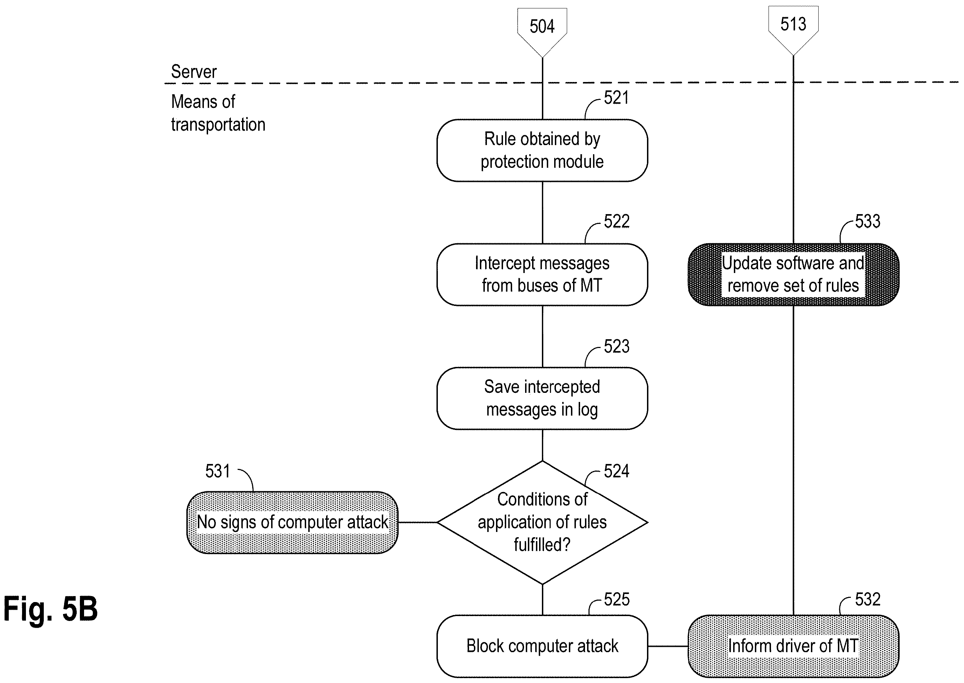

**Fig. 5A****-****Fig. 5B** is a flowchart illustrating methods **500** of implementing examples of the present disclosure, specifically for the systems of **Fig. 3-4****.** A method for creating rules includes the following. In step **501** the server **303** receives the log **304** from the protection module **102** of at least one MT **301.** The log **304** contains messages, and also information on at least one ECU which is the recipient of at least one of the mentioned messages that have been intercepted by the protection module **102** on the buses of the MT **301** in a certain period around of the time of occurrence of an incident with the MT (such as an RTA). Next, in step **502,** the detection of a computer attack is carried out by analyzing the obtained log **304.** After this, in step **503,** upon detecting a computer attack the following indicators of compromise in particular are determined: the messages used in the computer attack, and for each message information on at least one ECU of the MT which is the recipient of that message. As a result, in step **504** a rule is created for the protection module **102** on the basis of the indicators of compromise, which rule contains at least one condition for the application of the rule for the detection of a computer attack on the MT, and at least one action upon application of the rule for the blocking of the computer attack on the MT.

In a particular example, after detecting a computer attack and determining the indicators of compromise, the authorities (law enforcement agencies, insurance company) may be informed about the detected computer attack in order to carry out a group of measures to ascertain the persons responsible for the computer attack and bring them to justice **(511)** and also to meet the needs of the insurance company in determining the extent of the indemnification payments. In addition, information about a computer attack (the indicators of compromise, the log **304,** information about the MT, telemetry data, etc.) together with a request for a software update may be sent to the maker of the MT and/or the supplier of the ECU **(512)** that were utilized in carrying out the detected computer attack (accordingly indicated in the indicators of compromise). This step will allow the maker of the MT and the supplier of the ECU to develop an update for the software **(513)** of the electronic systems of the MT, especially the indicated ECU, which will eliminate the possibility of carrying out a computer attack. After developing the software update, this will be delivered and installed in all the MT for which the possibility exists of carrying out the detected computer attack (step **533).** Furthermore, a recall of all the MT is possible, and also a servicing may be performed to eliminate the possibility of carrying out a computer attack.

In another particular example, the analysis of the log **304** further includes a determination of the probability of a computer attack being conducted on the basis of the log **304.** In step **514,** if the probability of a computer attack being conducted exceeds a given value (such as 0.997, or within 3 standard deviations) or if the incident with the MT had severe consequences (for example, an RTA with serious consequences), it is considered that a computer attack has been detected or the conducting of a further detailed analysis of the log **304** is initiated (step **515).**

In calculating the probability of a computer attack being conducted, the server **303** take the following into consideration: that the RTA was caused by a set of factors, each of which is not an anomaly, but in their totality they result in the RTA and the probability that all of these factors occurred at the same time in the course of normal operation of the MT is low. Thus, the ECU malfunctioning at the time of occurrence of the incident are determined, and the probability of a computer attack being conducted is determined as being equal to the probability of the simultaneous malfunctioning of all the mentioned ECU (the probability of malfunctioning of each ECU is known in advance, for example it may be provided by the maker of the MT or the ECU). Let us consider an example in which the RTA occurred as a result of the coordinated failure of 3 different independent ECU, the failure of any two of which will not result in an RTA. Let us assume that the probability of failure of the first system is 0.1, the probability of failure of the second system is 0.15 and the probability of failure of the third system is 0.18. The combined probability of a random failure of all three systems in this case is 0.0027, and accordingly the probability that the failure was not caused by random factors is 0.9973, which surpasses the threshold value.

In another example, the server **303** take the following into consideration for calculating the probability of a computer attack being conducted: a large number of the same kind of RTA are registered in a short interval of time. Evaluation of the probability of an RTA of the given type with the MT of the given model in the course of the specified interval of time may be carried out by statistical methods. If it turns out that a large number of the same type of RTA occurred in a short interval of time, the probability that such a series of RTA was caused by random factors is very low and accordingly the probability of a targeted action may turn out to surpass the threshold value.

There are many other probability models which can be used to calculate the probability of an RTA having been caused by a computer attack. In a particular example, Bayesian belief networks, Markov chains, and other probability models may be used to calculate the probability of occurrence of an RTA as a result of a computer attack.

In a particular example, the calculation of the probability of a computer attack being conducted, and also the subsequent further analysis of the log **304** may include manual analysis by a security specialist. In yet another particular example, all similar incidents may be aggregated and an analysis conducted using the methods of machine learning. The aggregation of the incidents may be performed by identical makes and models of the MT, the ECU and gateways used, similar circumstances of the incident (RTA), partially coinciding or intersecting logs **304** for different MT and other characteristics. As a result of performing the further analysis, if a computer attack is confirmed or if the traces of a computer attack that has been conducted are found (step **516),** there will follow next a step **503** in which the indicators of compromise of the computer attack will be determined, after which a rule will be created for the protection module **102** in step **504.** Obviously, if in step **514** the calculated probability of a computer attack is lower than a given value, and the incident did not have severe consequences (RTA with insignificant consequences), the method will stop (step **518).** Similarly, if as a result of the further analysis in step **515** no traces of a computer attack have been found, the method will stop (step **517).**

In a particular example, the rules created by the server **303** in steps **501-504** are then used in the method of blocking a computer attack on the MT. In step **521** the protection module **102** receives at least one rule. Then, in step **522,** the protection module **102** intercepts messages being transmitted on the buses of the MT and in step **523** in the process of intercepting the messages the protection module **102** saves the intercepted messages in the log **304,** and also for each intercepted message at least one ECU of the MT which is the recipient of that message. In some examples, the protection module **102** extracts from the intercepted CAN message an identifier, which can determine the ECU-addressees.

The protection module **102** intercepts a plurality of messages transmitted on a first communications bus between a plurality of electronic control units (ECUs) of a vehicle. In some examples, the first communications bus comprises a Controller Area Network (CAN) bus, such that messages sent on the CAN bus are broadcast to all of the ECUs communicatively coupled to the CAN bus. The protection module **102** may determine at least one recipient ECU that is a recipient of the intercepted messages based on which ECUs are communicatively coupled to the first communications bus. In some examples, the protection module **102** may determine at least one recipient ECU that is a recipient of the intercepted messages based on the ID contained in the message on the CAN bus. The protection module **102** may store, in a log 304, the intercepted messages and information indicating the determined at least one recipient ECU. In some examples, the protection module 102 may store, in the log, time stamps corresponding to a time of interception of the intercepted messages.

In step **524** in the process of intercepting messages the protection module **102** checks the conditions for application of the received rules with the use of the log **304.** The protection module 102 detects a computer attack of the vehicle based on satisfaction of at least one condition of a rule by the stored messages and information in the log. In some examples, the computer attack is detected further based on the time stamps in the log. The at least one condition of the rule specifies presence of a defined group of messages in the log during a period of time associated with movement of the vehicle. In some examples, the at least one condition of the rule further specifies that the information indicating the at least one recipient ECU that is a recipient of the messages matches a defined group of ECU. In some examples, the at least one condition of the rule further specifies a state of movement of the vehicle, such that the rule is applied responsive to determining that the vehicle is in motion, and the rule is not applied responsive to determining that the vehicle is not moving. For example, if the vehicle is in motion and the above-indicated defined group of CAN messages arrive, the condition for application of the rule is satisfied; but if the automobile is not moving, the rule will not be applied, since in the second case it can be concluded that the receipt of such messages is not correlated with the exploitation of a vulnerability or computer attack. In another example, the at least one condition of the rule further specifies the presence of a defined group of messages arranged in a defined order in the log and were intercepted during a defined interval of time.

Upon fulfillment of the conditions for application of at least one rule, in step **525** the computer attack on the MT is blocked by carrying out the actions upon application of the rule. If the conditions for application of the rules are not fulfilled, then the entries in the log **304** contain no signs of a computer attack **(531).**

The protection module 102 blocks the computer attack of the vehicle by performing an action associated with the rule. For example, the rule may specify that, responsive to determining that a portion of the intercepted messages matches a defined group of messages to a first recipient, the action performed is that all messages are blocked from being transmitted on the first communications bus to the first recipient.

In one example, the computer attack may be blocked by transmitting to at least one ECU a message containing a command to disconnect the at least one ECU, based a determination that the at least one ECU that is on a list of ECUs of auxiliary electronic systems of the vehicle. For instance, using the above-described example of the Jeep, the ABS of the ECU may be disconnected, for example, as a result of which the above-described computer attack will not take place. In another example, the computer attack may be blocked by transmitting to at least one ECU a message containing a command to enable a safety mode for the at least one ECU that is on a list of ECUs of primary electronic systems of the vehicle.

In another example, the computer attack may be blocked by blocking transmission of at least one message from the first communications bus to a second communications bus of the vehicle via a gateway. For example, in the context of the sample network architecture of Fig. 3, the central gateway 101 may block the sending of messages from one subnetwork to the other, for example between the CAN-B bus 152 and the CAN-C bus 153. The computer attack is blocked by blocking transmission of at least one message between ECUs communicatively coupled on the same first communications bus. In one implementation, this can be accomplished by having the protection module 102 send a sequence of bit zeros on the bus, such that a different value than the at least one message is established on the bus, causing a receiving ECU to disregard the at least one message due to a discrepancy in a checksum of the message.

Obviously, the rules received in step **521** may be created not only as a result of carrying out steps **501-504,** but also in other cases. For example, a security audit of the MT may be carried out on the server **303** or directly on the MT **301** and a vulnerability may be discovered in one or more ECU. The indicated vulnerability need not have been exploited by hackers. In yet another example, outside investigators might discover a vulnerability in one or more ECU and report this to the maker. As a result, prior to releasing the update of the corresponding ECU a rule will be created for the protection module **102** to prevent the possibility of exploitation of the discovered vulnerability. The rule may be sent to the protection module **102** by the server **303** or it may be downloaded with the use of the network interface of the MT, for example via the diagnostic interface **155,** for example at a service center.

In a particular example, after the blocking of a computer attack **525** the driver of the MT may also be informed in step **532.** In yet another particular example, it may be necessary for the driver of the MT to perform a series of actions, such as allowing the disconnecting of the ECU module which was used in the computer attack.

After receiving from the supplier of the ECU an update correcting the possibility of conducting a computer attack and after installing this update in the corresponding ECU, a script may be obtained from the server **303** and executed to remove the rule in view of said rule no longer being relevant (step **533).** In one examples, responsive to applying, to one or more ECUs of the vehicle, a software update configured to patch a vulnerability of the ECU, the protection module 102 may remove one or more rules for detecting a computer attack on the vehicle.

**Fig. 6** presents the format of a frame of the CAN protocol. As shown a frame or message can include an identifier field (e.g., 11 bits) which is a unique identifier that represents the priority of the message within the bus. A message may further include a remote transmission request (RTR) field (e.g., 1 bit) which indicates a value that is dominant (i.e., 0 value) for data frames, or recessive (e.g., value of 1) for remote request frames. The message may further include a data length code (DLC) field that indicates a number of bytes of data contained in the message frame. The message then includes a data field containing the data to be transmitted. Additional fields in the message may include CRC fields, ACK slot, and an End of Frame indication.

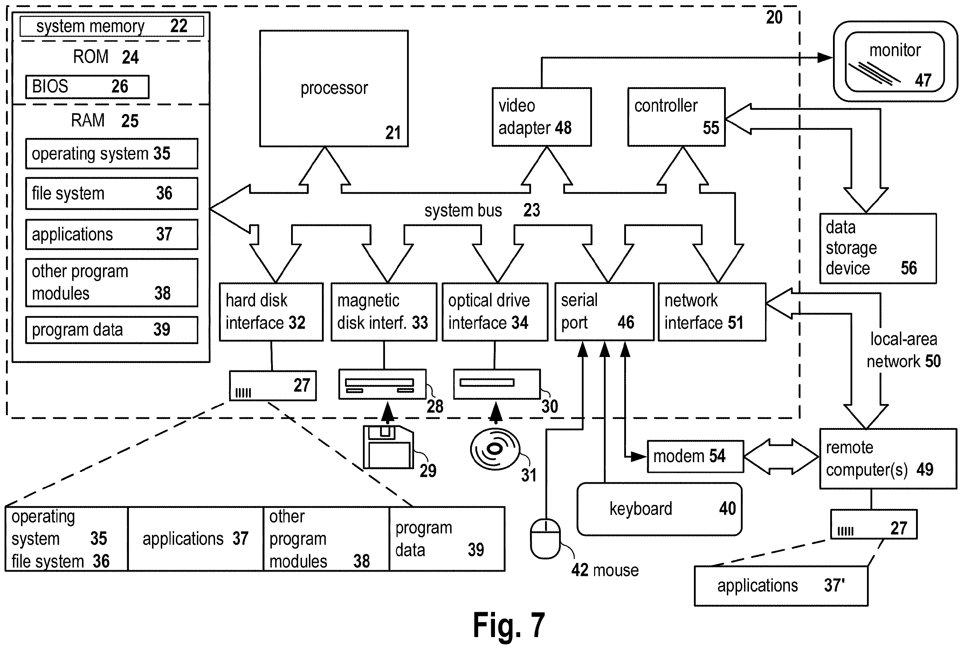

**Fig. 7** presents an example of a computer system **20** on which examples of systems and methods for detecting attacks on electronics systems of a vehicle may be implemented. In one particular example, the computer system may be used to realize the server **303,** as well as the electronic systems of the MT. In another particular example, the electronic systems of the MT may also be realized with the use of specialized integrated circuits. In yet another particular example, the electronic systems of the MT may be realized with the use of a dedicated computer.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33,** and the optical drive interface **34,** respectively. The drives and the corresponding computer information media are power-independent modules for storage of computer instructions, data structures, program modules, and other data of the computer system **20.**

In one example, a hard disk **27,** a removable magnetic disk **29** and a removable optical disk 31 may be connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are nonlimiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer (such as the one described in greater detail in **Fig. 7****,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A computer-implemented method for blocking attacks on electronics systems of a vehicle, comprising:
intercepting (522) a plurality of messages transmitted on a first communications bus between a plurality of Electronic Control Units, ECUs, of a vehicle;
determining at least one recipient Electronic Control Unit, ECU, that is a recipient of the intercepted messages, the determination of the at least one recipient of the intercepted message being based on which ECUs are communicatively coupled to the first communications bus;
storing (523), in a log (304), the intercepted messages and information indicating the determined at least one recipient ECU;
detecting (524) a computer attack of the vehicle based on a satisfaction of at least one condition of a rule by the stored messages and the information stored in the log, wherein the rule depends on one or more indicators of compromise comprised of malicious messages used in a computer attack and information on the at least one ECU that is a recipient of the malicious messages, the at least one condition of the rule specifying at least a presence of a defined group of messages in the log during a period of time associated with a movement of the vehicle; and
blocking (525) the detected computer attack of the vehicle by performing an action associated with the rule, wherein the blocking of the computer attack further comprises blocking a transmission of at least one message between ECUs communicatively coupled on the same first communications bus.

2. The method according to claim 1, wherein the first communications bus comprises at least one of a Controller Area Network, CAN bus, a Local Interconnect Network, LIN, a Media Oriented Systems Transport, MOST bus, a FlexRay bus, and an Ethernet bus, wherein messages sent on the first communications bus are broadcast to all of the ECUs communicatively coupled to the communications bus.

3. The method according to any of claims 1 to 2, further comprising:
storing (523), in the log (304), time stamps corresponding to a time of the interception of the intercepted messages, and wherein the detection of the computer attack is further based on the time stamps in the log.

4. The method according to claim 1, wherein the at least one condition of the rule further specifies that the information indicating the at least one recipient ECU that is the recipient of the messages matches a defined group of ECU.

5. The method according claim 1, wherein the at least one condition of the rule further specifies a state of a movement of the vehicle, such that the rule is applied responsive to determining that the vehicle is in motion, and the rule is not applied responsive to determining that the vehicle is not moving.

6. The method according to any of claims 1 to 5, wherein the rule specifies, responsive to determining that a portion of the intercepted messages matches a defined group of messages to a first recipient, all messages are blocked from being transmitted on the first communications bus to the first recipient.

7. The method according to any of claims 1 to 6, wherein the at least one condition of the rule further specifies the presence of a defined group of messages arranged in a defined order in the log (304) and were intercepted during a defined interval of time.

8. The method according to any of claims 1 to 7, wherein the blocking (525) of the computer attack of the vehicle by performing the action associated with the rule further comprises:
transmitting to at least one ECU a message containing a command to disconnect the at least one ECU that is on a list of ECUs of auxiliary electronic systems of the vehicle.

9. The method according to any of claims 1 to 8, wherein the blocking (525) of the computer attack of the vehicle by performing the action associated with the rule further comprises:
transmitting to at least one ECU a message containing a command to enable a safety mode for the at least one ECU that is on a list of ECUs of primary electronic systems of the vehicle.

10. The method according to any of claims 1 to 9, wherein the blocking (525) of the computer attack of the vehicle by performing the action associated with the rule further comprises:
blocking a transmission of at least one message from the first communications bus to a second communications bus of the vehicle via a gateway.

11. The method according to any of claims 1 to 10, further comprising:
responsive to applying, to one or more ECUs of the vehicle, a software update configured to patch a vulnerability of the ECU, removing the rule for detecting the computer attack on the vehicle.

12. The method according to any of claims 1 to 11, wherein the condition for applying the rule depends on the one or more of the state of at least one ECU or the performance of at least one ECU.

13. A computer system for blocking attacks on electronics systems of a vehicle, the computer system comprising:
a plurality of Electronic Control Units, ECUs;
a first communications bus configured to communicatively couple the plurality of ECUs; and
a hardware processor configured to:
intercept (522) a plurality of messages transmitted on the first communications bus between the plurality of ECUs,
determine at least one recipient Electronic Control Unit, ECU, that is a recipient of the intercepted messages, the determination of the at least one recipient of the intercepted message being based on which ECUs are communicatively coupled to the first communications bus,
store (523), in a log (304), the intercepted messages and information indicating the determined at least one recipient ECU,
detect (524) a computer attack of the vehicle based on a satisfaction of at least one condition of a rule by the stored messages and the information stored in the log, wherein the rule depends on one or more indicators of compromise comprised of malicious messages used in a computer attack and information on the at least one ECU that is a recipient of the malicious messages, the at least one condition of the rule specifying at least a presence of a defined group of messages in the log during a period of time associated with a movement of the vehicle, and
block (525) the detected computer attack of the vehicle by performing an action associated with the rule, wherein the blocking of the computer attack further comprises blocking a transmission of at least one message between ECUs communicatively coupled on the same first communications bus.

## Patentansprüche

1. Ein computerimplementiertes Verfahren zum Blockieren von Angriffen auf elektronische Systeme eines Fahrzeugs, umfassend:
Abfangen (522) einer Vielzahl von Nachrichten, die auf einem ersten Kommunikationsbus zwischen einer Vielzahl von elektronischen Steuereinheiten (*Electronic Control Units* - ECUs), ECUs, eines Fahrzeugs übertragen werden;
Bestimmen mindestens einer empfangenden elektronischen Steuereinheit, ECU, die ein Empfänger der abgefangenen Nachrichten ist, wobei die Bestimmung des mindestens einen Empfängers der abgefangenen Nachricht darauf basiert, welche ECUs kommunikativ mit dem ersten Kommunikationsbus verbunden sind;
Speichern (523), in einem Protokoll (304), der abgefangenen Nachrichten und von Informationen, die die bestimmte mindestens eine empfangende ECU abgeben;
Detektieren (524) eines Angriffs auf den Fahrzeug-Computer bzw. eines Computerangriffs auf das Fahrzeug auf der Grundlage einer Erfüllung von mindestens einer Bedingung einer Regel durch die gespeicherten Nachrichten und durch die im Protokoll gespeicherten Informationen, wobei die Regel von einem oder mehreren Kompromittierungsindikatoren (*indicators of compromise*) abhängt, die böswillige Nachrichten, die in einem Computerangriff verwendet werden, und Informationen über die mindestens eine ECU umfassen, die ein Empfänger der böswilligen Nachrichten ist, wobei die mindestens eine Bedingung der Regel zumindest ein Vorhandensein einer definierten Gruppe von Nachrichten im Protokoll während eines Zeitraums spezifiziert, der mit einer Bewegung des Fahrzeugs verknüpft ist; und
Blockieren (525) des detektierten Computerangriffs auf das Fahrzeug durch das Ausführen einer mit der Regel verknüpften Aktion, wobei das Blockieren des Computerangriffs ferner das Blockieren einer Übertragung von mindestens einer Nachricht zwischen ECUs umfasst, die kommunikativ auf demselben ersten Kommunikationsbus gekoppelt sind.

2. Das Verfahren nach Anspruch 1, wobei der erste Kommunikationsbus mindestens eines der folgenden umfasst: einen *Controller Area Network,* CAN-Bus, ein *Local Interconnect Network,* LIN, einen *Media Oriented Systems Transport,* MOST-Bus, einen FlexRay-Bus und einen Ethernet-Bus, wobei Nachrichten, die auf dem ersten Kommunikationsbus gesendet werden, an alle Steuergeräte gesendet werden, die kommunikativ mit dem Kommunikationsbus verbunden sind.

3. Das Verfahren nach irgendeinem der Ansprüche von 1 bis 2, das ferner Folgendes umfasst:
Speichern (523), im Protokoll (304), von Zeitstempeln, die einem Zeitpunkt des Abfangens der abgefangenen Nachrichten entsprechen, und wobei das Erkennen des Computerangriffs ferner auf den Zeitstempeln im Protokoll basiert.

4. Das Verfahren nach Anspruch 1, wobei die mindestens eine Bedingung der Regel ferner spezifiziert, dass die Information, die die mindestens eine empfangende ECU angibt, die der Empfänger der Nachrichten ist, mit einer definierten Gruppe von ECU übereinstimmt.

5. Das Verfahren nach Anspruch 1, wobei die mindestens eine Bedingung der Regel ferner einen Bewegungszustand des Fahrzeugs spezifiziert, sodass die Regel angewendet wird in Reaktion auf die Feststellung, dass das Fahrzeug in Bewegung ist, und die Regel nicht angewendet wird in Reaktion auf die Feststellung, dass das Fahrzeug nicht in Bewegung ist.

6. Das Verfahren nach irgendeinem der Ansprüche von 1 bis 5, wobei die Regel in Reaktion auf die Feststellung, dass ein Teil der abgefangenen Nachrichten mit einer definierten Gruppe von Nachrichten an einen ersten Empfänger übereinstimmt, festlegt, dass alle Nachrichten für die Übertragung auf dem ersten Kommunikationsbus an den ersten Empfänger gesperrt werden.

7. Das Verfahren nach irgendeinem der Ansprüche von 1 bis 6, wobei die mindestens eine Bedingung der Regel ferner das Vorhandensein einer definierten Gruppe von Nachrichten spezifiziert, die in einer definierten Reihenfolge im Protokoll (304) angeordnet sind und während eines definierten Zeitintervalls abgefangen wurden.

8. Das Verfahren nach irgendeinem der Ansprüche von 1 bis 7, wobei das Blockieren (525) des Computerangriffs auf das Fahrzeug durch Ausführen der mit der Regel verknüpften Aktion ferner Folgendes umfasst:
Übertragen, an mindestens eine ECU, einer Nachricht die einen Befehl zum Abschalten der mindestens einen ECU enthält, die sich auf einer Liste von ECUs elektronischer Hilfssysteme des Fahrzeugs befindet.

9. Das Verfahren nach irgendeinem der Ansprüche von 1 bis 8, wobei das Blockieren (525) des Computerangriffs des Fahrzeugs durch Ausführen der mit der Regel verknüpften Aktion ferner Folgendes umfasst:
Übertragen, an mindestens eine ECU, einer Nachricht, die einen Befehl zum Aktivieren eines Sicherheitsmodus für die mindestens eine ECU enthält, das sich auf einer Liste von ECUs elektronischer Primärsysteme des Fahrzeugs befindet.

10. Das Verfahren nach irgendeinem der Ansprüche von 1 bis 9, wobei das Blockieren (525) des Computerangriffs des Fahrzeugs durch Ausführen der mit der Regel verknüpften Aktion ferner Folgendes umfasst:
Blockieren einer Übertragung von mindestens einer Nachricht vom ersten Kommunikationsbus zu einem zweiten Kommunikationsbus des Fahrzeugs über ein Gateway.

11. Das Verfahren nach irgendeinem der Ansprüche von 1 bis 10, das ferner Folgendes umfasst:
in Reaktion auf die Anwendung eines Software-Updates, das so konfiguriert ist, dass es eine Schwachstelle der ECU ausbessert, auf eines oder mehrere ECUs des Fahrzeugs, Entfernen der Regel zum Erkennen des Computerangriffs auf das Fahrzeug.

12. Das Verfahren nach irgendeinem der Ansprüche von 1 bis 11, wobei die Bedingung für die Anwendung der Regel von einem oder mehreren der folgenden abhängt: vom Zustand von mindestens einer ECU oder von der Performance von mindestens einer ECU.

13. Ein Computersystem zum Blockieren von Angriffen auf elektronische Systeme eines Fahrzeugs, wobei das Computersystem Folgendes umfasst:
eine Vielzahl von elektronischen Steuereinheiten (*Electronic Control Units -* ECUs), ECUs;
einen ersten Kommunikationsbus, der konfiguriert ist, um die Vielzahl von ECUs kommunikativ zu koppeln; und
einen Hardware-Prozessor, der konfiguriert ist, um Folgendes zu bewerkstelligen:
Abfangen (522) einer Vielzahl von Nachrichten, die auf dem ersten Kommunikationsbus zwischen der Vielzahl von ECUs übertragen werden,
Bestimmen mindestens einer empfangenden elektronischen Steuereinheit, ECU, die ein Empfänger der abgefangenen Nachrichten ist, wobei die Bestimmung des mindestens einen Empfängers der abgefangenen Nachricht darauf basiert, welche ECUs kommunikativ mit dem ersten Kommunikationsbus verbunden sind;
Speichern (523), in einem Protokoll (304), der abgefangenen Nachrichten und von Informationen, die die bestimmte mindestens eine empfangende ECU abgeben;
Detektieren (524) eines Angriffs auf den Fahrzeug-Computer bzw. eines Computerangriffs auf das Fahrzeug auf der Grundlage einer Erfüllung von mindestens einer Bedingung einer Regel durch die gespeicherten Nachrichten und durch die im Protokoll gespeicherten Informationen, wobei die Regel von einem oder mehreren Kompromittierungsindikatoren (*indicators of compromise*) abhängt, die böswillige Nachrichten, die in einem Computerangriff verwendet werden, und Informationen über die mindestens eine ECU umfassen, die ein Empfänger der böswilligen Nachrichten ist, wobei die mindestens eine Bedingung der Regel zumindest ein Vorhandensein einer definierten Gruppe von Nachrichten im Protokoll während eines Zeitraums spezifiziert, der mit einer Bewegung des Fahrzeugs verknüpft ist; und
Blockieren (525) des detektierten Computerangriffs auf das Fahrzeug durch das Ausführen einer mit der Regel verknüpften Aktion, wobei das Blockieren des Computerangriffs ferner das Blockieren einer Übertragung von mindestens einer Nachricht zwischen ECUs umfasst, die kommunikativ auf demselben ersten Kommunikationsbus gekoppelt sind.

## Revendications

1. Procédé mis en œuvre par ordinateur pour bloquer des attaques sur des systèmes électroniques d'un véhicule, comprenant :
une interception (522) d'une pluralité de messages transmis sur un premier bus de communication entre une pluralité d'unités de commande électroniques, ECU, d'un véhicule ;
une détermination d'au moins une unité de commande électronique, ECU, destinataire qui est une destinataire des messages interceptés, la détermination de l'au moins une destinataire du message intercepté étant basée sur quelles ECU sont couplées en communication au premier bus de communication ;
un stockage (523), dans un journal (304), des messages interceptés et d'informations indiquant l'au moins une ECU destinataire déterminée ;
une détection (524) d'une attaque informatique du véhicule sur la base d'une satisfaction d'au moins une condition d'une règle par les messages stockés et les informations stockées dans le journal, dans lequel la règle dépend d'un ou plusieurs indicateurs de compromission se composant de messages malveillants utilisés dans une attaque informatique et d'informations sur l'au moins une ECU qui est une destinataire des messages malveillants, l'au moins une condition de la règle spécifiant au moins une présence d'un groupe défini de messages dans le journal au cours d'une période de temps associée à un déplacement du véhicule ; et
un blocage (525) de l'attaque informatique détectée du véhicule par la réalisation d'une action associée à la règle, dans lequel le blocage de l'attaque informatique comprend en outre le blocage d'une transmission d'au moins un message entre des ECU couplées en communication sur le même premier bus de communication.

2. Procédé selon la revendication 1, dans lequel le premier bus de communication comprend au moins l'un parmi un bus de réseau de zone de contrôleur, CAN, un réseau d'interconnexion local, LIN, un bus de transport de système orienté média, MOST, un bus FlexRay, et un bus Ethernet, dans lequel des messages envoyés sur le premier bus de communication sont diffusés à l'intégralité des ECU couplées en communication au bus de communication.

3. Procédé selon la revendication 1 ou 2, comprenant en outre :
le stockage (523), dans le journal (304), d'horodatages correspondant à un temps de l'interception des messages interceptés, et dans lequel la détection de l'attaque informatique est en outre basée sur les horodatages dans le journal.

4. Procédé selon la revendication 1, dans lequel l'au moins une condition de la règle spécifie en outre que les informations indiquant l'au moins une ECU destinataire qui est la destinataire des messages correspond à un groupe défini d'ECU.

5. Procédé selon la revendication 1, dans lequel l'au moins une condition de la règle spécifie en outre un état d'un déplacement du véhicule, de sorte que la règle soit appliquée en réponse à la détermination que le véhicule est en mouvement, et que la règle ne soit pas appliquée en réponse à la détermination que le véhicule n'est pas en mouvement.

6. Procédé selon l'une quelconque des revendications 1 à 5, dans lequel la règle spécifie, en réponse à la détermination qu'une partie des messages interceptés correspond à un groupe défini de messages destinés à un premier destinataire, le blocage de la transmission de tous les messages sur le premier bus de communication au premier destinataire.

7. Procédé selon l'une quelconque des revendications 1 à 6, dans lequel l'au moins une condition de la règle spécifie en outre la présence d'un groupe défini de messages agencés dans un ordre défini dans le journal (304) et qui ont été interceptés au cours d'un intervalle de temps défini.

8. Procédé selon l'une quelconque des revendications 1 à 7, dans lequel le blocage (525) de l'attaque informatique du véhicule par la réalisation de l'action associée à la règle comprend en outre :
une transmission, à au moins une ECU, d'un message contenant une commande de déconnexion de l'au moins une ECU qui se trouve dans une liste d'ECU de systèmes électroniques auxiliaires du véhicule.

9. Procédé selon l'une quelconque des revendications 1 à 8, dans lequel le blocage (525) de l'attaque informatique du véhicule par la réalisation de l'action associée à la règle comprend en outre :
une transmission, à au moins une ECU, d'un message contenant une commande d'activation d'un mode de sécurité pour l'au moins une ECU qui se trouve dans une liste d'ECU de systèmes électroniques primaires du véhicule.

10. Procédé selon l'une quelconque des revendications 1 à 9, dans lequel le blocage (525) de l'attaque informatique du véhicule par la réalisation de l'action associée à la règle comprend en outre :
un blocage d'une transmission d'au moins un message depuis le premier bus de communication à un second bus de communication du véhicule par l'intermédiaire d'une passerelle.

11. Procédé selon l'une quelconque des revendications 1 à 10, comprenant en outre :
en réponse à l'application, à une ou plusieurs ECU du véhicule, d'une mise à jour logicielle configurée pour corriger une vulnérabilité de l'ECU, une suppression de la règle pour détecter l'attaque informatique sur le véhicule.

12. Procédé selon l'une quelconque des revendications 1 à 11, dans lequel la condition d'application de la règle dépend d'un ou plusieurs parmi l'état d'au moins une ECU ou les performances d'au moins une ECU.

13. Système informatique pour bloquer des attaques sur des systèmes électroniques d'un véhicule, le système informatique comprenant :
une pluralité d'unités de commande électroniques, ECU ;
un premier bus de communication configuré pour coupler en communication la pluralité d'ECU ; et
un processeur matériel configuré pour :
intercepter (522) une pluralité de messages transmis sur le premier bus de communication entre la pluralité d'ECU ;
déterminer au moins une unité de commande électronique, ECU, destinataire qui est une destinataire des messages interceptés, la détermination de l'au moins une destinataire du message intercepté étant basée sur quelles ECU sont couplées en communication au premier bus de communication,
stocker (523), dans un journal (304), les messages interceptés et des informations indiquant l'au moins une ECU destinataire déterminée ;
détecter (524) une attaque informatique du véhicule sur la base d'une satisfaction d'au moins une condition d'une règle par les messages stockés et les informations stockées dans le journal, dans lequel la règle dépend d'un ou plusieurs indicateurs de compromission se composant de messages malveillants utilisés dans une attaque informatique et d'informations sur l'au moins une ECU qui est une destinataire des messages malveillants, l'au moins une condition de la règle spécifiant au moins une présence d'un groupe défini de messages dans le journal au cours d'une période de temps associée à un déplacement du véhicule ; et
bloquer (525) l'attaque informatique détectée du véhicule par la réalisation d'une action associée à la règle, dans lequel le blocage de l'attaque informatique comprend en outre le blocage d'une transmission d'au moins un message entre des ECU couplées en communication sur le même premier bus de communication.
